# EUROPEAN PATENT APPLICATION

(11) **EP 2 557 322 A1**
(43) Date of publication of application: **13.02.2013**
(21) Application number: 11176849.5
(22) Date of filing: 08.08.2011
(51) Int. Cl.: F16B 37/12

(54) **Fixing arrangement**

(71) Applicant: Delphi Technologies Holding S.à.r.l., 4940 Bascharage (LU)
(72) Inventor: Navas Sanchez, Borja, Chatham, Kent ME4 4DL (GB)
(74) Representative: Gregory, John David Charles

(57) **Abstract**

A fixing insert (10) for use in fixing a first part (50) to a second part (60) is disclosed. The fixing insert (10) comprises a body (12) having first and second ends (14, 16) and defining a body axis (A) extending therebetween. The body (12) comprises engagement means (18) for engaging a fastener, in use, and a plurality of anchor portions (20a, 20b, 20c) distributed along the body axis (A), each anchor portion (20a, 20b, 20c) extending laterally with respect to the body axis (A). The respective lateral extent (R_{A}) of each anchor portion (20a, 20b, 20c) is proportional to the distance between the respective anchor portion (20a, 20b, 20c) and the first end (14) of the body (12).

## Description

### Field of the invention

The present invention relates to a fixing arrangement. In particular, but not exclusively, the invention relates to an embeddable fixing insert suitable for use in fastening a component to a body of plastics material.

### Background to the invention

In many fields, and in particular in the automotive industry, the substitution of components made from metal for those made from plastics materials is becoming increasingly desirable for several reasons. In particular, components made from plastics materials tend to be cheaper in terms of both raw material cost and manufacturing cost than their metal equivalents. Also, because plastics materials typically have lower densities than metals, useful weight savings can often be achieved. Another advantage is that prototyping using plastics materials is often faster, easier and cheaper compared to using metal materials, giving benefits during product development.

In some applications, such as those involving high mechanical or hydraulic forces or high temperatures, it can be desirable to use components made from metals for parts of an assembly in which high strength and/or temperature resistance is required, alongside components made from plastics materials for parts of the assembly where high strength and/or temperature resistance is less important. For example, in a high-pressure fuel injection system, it may be desirable to use plastics materials for casings, low-pressure connections, mounting components and so on, and metal materials for conduits, valves, pump assemblies, high-pressure connections and other components of the injection system that carry fuel at high pressure or that are subject to high pumping loads.

There is also interest in the replacement of metal materials with lightweight, plastics-based composite materials in components and parts where stiffness and load-carrying ability is important but where a reduction in weight is desirable. In this case, composite materials, such as fibre-reinforced plastics materials, may be used for parts which are subjected to high mechanical and/or hydraulic loads, while cheaper materials such as non-reinforced plastics materials may be used for other parts.

Accordingly, there is a need to join or fix a first part made from plastics or a similar material, including reinforced composite materials having a matrix of plastics material, to a second part that may be made from any material, including metal, plastics, composites and so on.

It is known in the art to provide fixing means for this purpose, comprising for example an internally-threaded, generally tubular insert that is retained in a suitable recess in the plastics part. A bolt or similar externally-threaded fastener attached to or otherwise engaged with the second part can be screwed into the insert, thereby allowing the second part to be attached to the first part. The insert is conveniently embedded in the plastics material of the first part during a moulding operation, such as injection moulding, used to form the first part. One example of a fixing arrangement of this type is described in United Kingdom Patent Publication No. GB 1 441 924.

Usually, in such fixing arrangements, the fastener is tightened in the insert so that the fastener is held in tension to bias the first and second parts towards one another. In this way, the fixing arrangement serves to clamp the first and second parts together. It will be appreciated that, when the fastener is in tension, the forces that act on the insert tend to pull the insert out of the recess. These pull-out forces can be increased further if the first and second parts are subject to external forces in use that tend to draw the components apart.

Fixing arrangements of this type are susceptible to various modes of failure under the influence of such forces. For example, in one failure mode, delamination or cracking occurs at the interface between the insert and the recess, so that the insert pulls out from the first part resulting in failure of the fixing arrangement. To reduce the risk of the insert being pulled out of the first part in use, it is known to provide the outermost surface of the insert with knurling, ribbing, serrations, screw-threads or similar features, which help to grip the plastics material that forms the recess.

However, even if the interface between the insert and the plastics material remains sound, in another failure mode, the plastics material itself may fail by cracking, yielding or otherwise in the region around the insert. This again results in failure of the fixing between the first and second parts.

Accordingly, because the risk of failure, known fixing arrangements of this type can be unsuitable for some applications in which the fixing arrangement is subjected to particularly high loads.

Against this background, it would be desirable to provide a fixing arrangement for fixing together a first part made from a plastics material to a second part which offers improved resistance to failure, and which is particularly suitable for high-load applications in the automotive field.

### Summary of the invention

From a first aspect, the present invention resides in a fixing insert comprising a body having first and second ends and defining a body axis extending therebetween. The body comprises engagement means for engaging a fastener, in use, and a plurality of anchor portions distributed along the body axis. Each anchor portion extends laterally with respect to the body axis. The respective lateral extent of each anchor portion is proportional to the distance between the respective anchor portion and the first end of the body.

In use, the insert is preferably embedded within the material of a first part, and a fastener is engaged with the engagement means of the insert to retain a second part against the first part.

Moving away from the first end of the body and towards the second end of the body, each successive anchor portion extends progressively further from the body axis. Therefore the periphery of each anchor portion is laterally offset from the periphery of the neighbouring anchor portions (i.e. the outer edges of neighbouring anchor portions are at different radial distances from the body axis). When an axial force is applied to the insert in use, to load the insert in the direction of the first end of the body, the shear stresses that arise in the material are distributed in a plurality of relatively small regions in the material, close to the periphery of each of the anchor portions. The shape of the insert thereby serves to reduce the risk of failure of the material of the first part to shear stresses.

Furthermore, when the insert is loaded in the direction of the first end of the body, the laterally-extending anchor portions load the material of the first part primarily in compression. Thus, when the first part is made from a material that is relatively strong in compression, such as a plastics material, the shape of the insert serves to utilise the strength of the material of the first part in an optimised way.

In combination, these advantages arising from the shape of the insert of the present invention mean that the risk of failure of a fixing arrangement using the insert is substantially reduced compared to known insert designs. Also, the insert can be used even when relatively high forces are present that would otherwise pull the first and second parts apart, such as in automotive applications.

The respective lateral extent of each anchor portion need not be linearly proportional to the distance between the respective anchor portion and the first end of the body, but could instead be non-linearly proportional. In general terms, the respective lateral extent of each anchor portion increases as the distance between the respective anchor portion and the first end of the body increases.

In one embodiment, each anchor portion comprises an annular rib, and the respective lateral extent of each anchor portion is a radius of the respective rib. Each rib may include a cylindrical outer surface.

The anchor portions are preferably spaced apart along the body axis to define recess portions between adjacent ones of the anchor portions. For example, each recess portion may include a base, and the lateral distance from the body axis to each base is preferably less than the respective lateral extent of each anchor portion adjacent to the respective base.

In use, the material of the first part can be moulded into or otherwise introduced into the recess portions, thereby to provide a mechanical keying effect between the insert and the first part. Furthermore, the presence of the recess portions increases the surface area of the anchor portions that is available to transfer load to the first part in a compressive manner. Therefore the recess portions serve to increase further the resistance to failure of a fixing arrangement including the insert of the present invention.

In one embodiment, the lateral distance from the body axis to the base of each recess portion is proportional to the distance of the respective recess portion from the first end of the body. In this way, both the anchor portions and the recess portions may define a generally frustoconical shape of the insert.

The base of each recess portion may comprise a cylindrical surface. In this case, the lateral distance from the body axis to the base of each recess portion may comprise a radius of the base. When, in addition, the anchor portions comprise annular ribs defining a cylindrical outer surface, the insert can readily be formed by rotary machining of a tubular or cylindrical blank of material.

The fixing may further comprise a nose portion disposed between the first end of the body and a frontmost one of the anchor portions. The nose portion preferably has a front corner disposed at the first end of the body. The length of the nose portion, along the body axis A, can be selected so as to optimise the length of the body available for engaging with a fastener, in use, without changing the geometry of the anchor portions and the recess portions when present.

The anchor portions may extend outwardly to a conical envelope defined between the front corner of the nose portion and a front edge or corner of a rearmost one of the anchor portions. In one particular arrangement, at least one anchor portion, other than the rearmost anchor portion, is dimensioned such that the conical envelope meets the midplane of the respective anchor portion at its lateral extent. This arrangement has been found to be particularly advantageous in reducing the risk of failure of the first part and the risk of pull-out of the insert. In another arrangement, each of the anchor portions lies within the conical envelope.

In one embodiment, three anchor portions are provided. For example, an intermediate anchor portion may be disposed between the frontmost and rearmost anchor portions. The conical envelope may meet the midplane of the frontmost and intermediate anchor portions respectively at their respective lateral extents. Said another way, in this arrangement, the rearmost anchor portion lies within the conical envelope, but the front and intermediate anchor portions intersect the conical envelope so that a small portion of each of the front and intermediate anchor portions lies outside the conical envelope.

The corners and edges of the insert may be radiused, chamfered or otherwise shaped in order to avoid stress concentrations in the first part and/or in the insert itself. For example, at least a front corner of each anchor portion may be radiused.

In one embodiment, the engagement means conveniently comprises a bore for engaging a shaft of the fastener in use. The bore may be internally threaded for engagement with a threaded shaft of the fastener, although other engagement means are also possible. The bore may be open to the first end of the body, and optionally also to the second end of the body.

In a second aspect, the invention extends to an assembly comprising a fixing insert according to the first aspect of the invention, a first part, a second part, and a fastener. The fixing insert is embedded within the first part. The fastener is cooperable with the second part and engageable with the engagement means of the fastener to fix the second part to the first part. The first end of the body of the fixing insert is preferably exposed on a mating surface of the first part.

Preferred and/or optional features of the first aspect of the invention may be present, alone or in appropriate combination, in the second aspect of the invention also. Further preferred and/or optional features and advantages of the invention will become apparent from the following description.

### Brief description of the drawings

Embodiments of the present invention will now be described, by way of example only, with reference to the accompanying drawings in which like reference numerals are used for like parts, and in which:
Figure 1 is a side view of a fixing insert according to an embodiment of the invention;
Figure 2 is a cross-sectional view of the fixing insert of Figure 1;
Figure 3 is an enlarged side view of part of the fixing insert of Figure 1, showing the shape of the insert in more detail; and
Figure 4 is a cross-sectional view of the fixing insert of Figure 1, in use in an assembly.

### Detailed description of embodiments of the invention

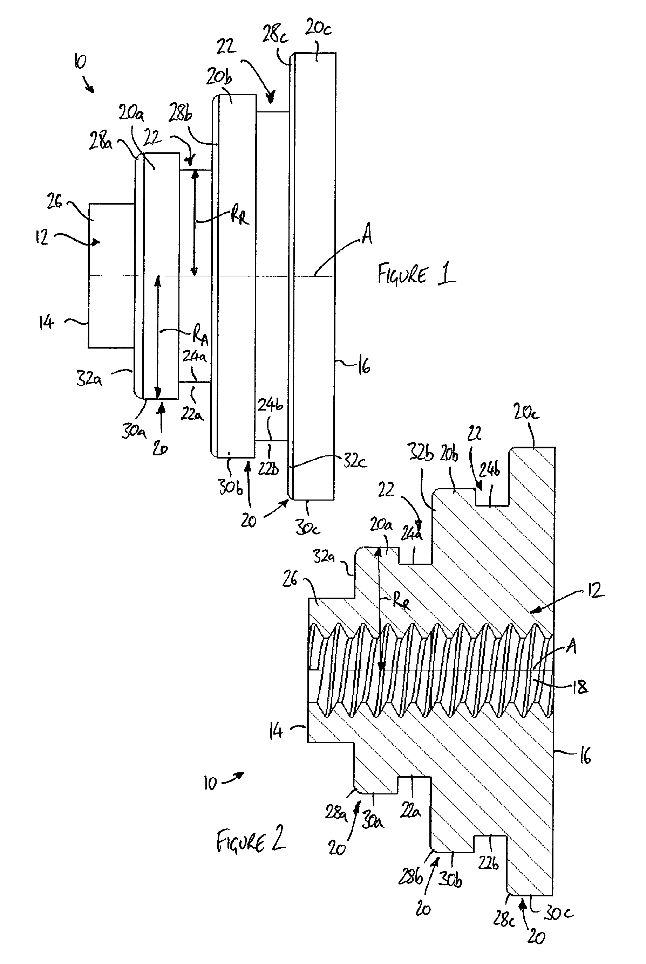

Referring first to Figures 1 and 2, a fixing insert 10 according to one embodiment of the invention has the form of a body of revolution about a body axis A.

The insert 10 comprises a generally tubular body 12 having a first end, referred to hereafter as a front end 14, and a second end, referred to hereafter as a back end 16. A through-bore 18, visible in Figure 2, extends through the body 12 along the body axis A between the front end 14 and the back end 16. The through-bore 18 is internally threaded to engage with an externally-threaded fastener, as will be explained in more detail below.

The insert 10 further comprises a plurality of outwardly-extending anchor portions 20. The anchor portions 20 comprise annular flanges or ribs 20a, 20b, 20c extending around the body 12. In this embodiment, three such ribs, namely a first rib 20a, a second rib 20b and a third rib 20c are provided, although in other embodiments fewer or more ribs could be present.

The ribs 20a, 20b, 20c are distributed along the body axis A, with the first rib (or frontmost rib) 20a closest to the front end 14 of the body, the third rib (or rearmost rib) 20c closest to the back end 16 of the body, and the second rib 20b at an intermediate position between the first and third ribs 20a, 20c. The ribs 20a, 20b, 20c are spaced apart to define recesses 22 between adjacent pairs of the ribs 20a, 20b, 20c. In this embodiment, a first recess 22a is disposed between the first and second ribs 20a, 20b, and a second recess 22b is disposed between the second and third ribs 22b, 22c.

The ribs 20a, 20b, 20c extend radially outwards from the body 12 to define cylindrical outermost surfaces 30a, 30b, 30c of each rib 20a, 20b, 20c. The lateral extent of each rib 20a, 20b, 20c with respect to the body axis A can be expressed as a radius of each rib 20a, 20b, 20c. The rib radius increases in proportion to the distance between the respective rib 20a, 20b, 20c and the front end 14 of the body 12. In other words, the radius of the first rib 20a (labelled R_{A} in Figure 1), which is closest to the front end 14 of the body 12, is smaller than the radius of the second rib 20b. In turn, the radius of the second rib 20b is smaller than the radius of the third rib 20c, which is closest to the back end 16 of the body 12.

Each recess 22a, 22b is defined, in part, by a base 24a, 24b. The base 24a, 24b of each recess 22a, 22b can be considered as the cylindrical surface of a disc, such that the lateral distance between the base 24a, 24b and the body axis A can be expressed as the radius of the respective disc. The lateral distance between the base 24a, 24b and the body axis A increases in proportion to the distance between the respective recess 22a, 22b and the front end 14 of the body 12. Therefore, the radius of the disc that defines the base 24a of the first recess 22a (labelled R_{R} in Figure 1), which is closest to the front end 14 of the body 12, is smaller than the radius of the disc that defines the base 24b of the second recess 22b, which is closest to the back end 16 of the body 12.

The depth of each recess 22a, 22b can be expressed as the difference between the radius R_{A} of the adjacent rib 20a, 20b on the side of the recess 22a, 22b closest to the front end 14 of the body 12, and the radius R_{R} of the disc that defines the base 24a, 24b of each recess 22a, 22b. For example, referring to Figure 1, the depth of the first recess 22a is the quantity R_{A} - R_{R}. In this embodiment, both recesses 22a, 22b have approximately equal depths when expressed in this way.

The first rib 20a is spaced from the first end 14 of the body 12, leaving a tubular nose portion 26 of the body adjacent to the first end 14. The third rib 20c is positioned at the second end 16 of the body 12, so that a side face of the third rib 20c is coplanar with the second end 16.

The front corner or edge 28a, 28b, 28c of each rib 20a, 20b, 20c that is closest to the first end 14 of the body 12 is radiused to provide a smooth transition between the face 32a, 32b, 32c of each rib closest to the front end 14 of the body, and the cylindrical outer surface 30a, 30b, 30c of each rib 20a, 20b, 20c.

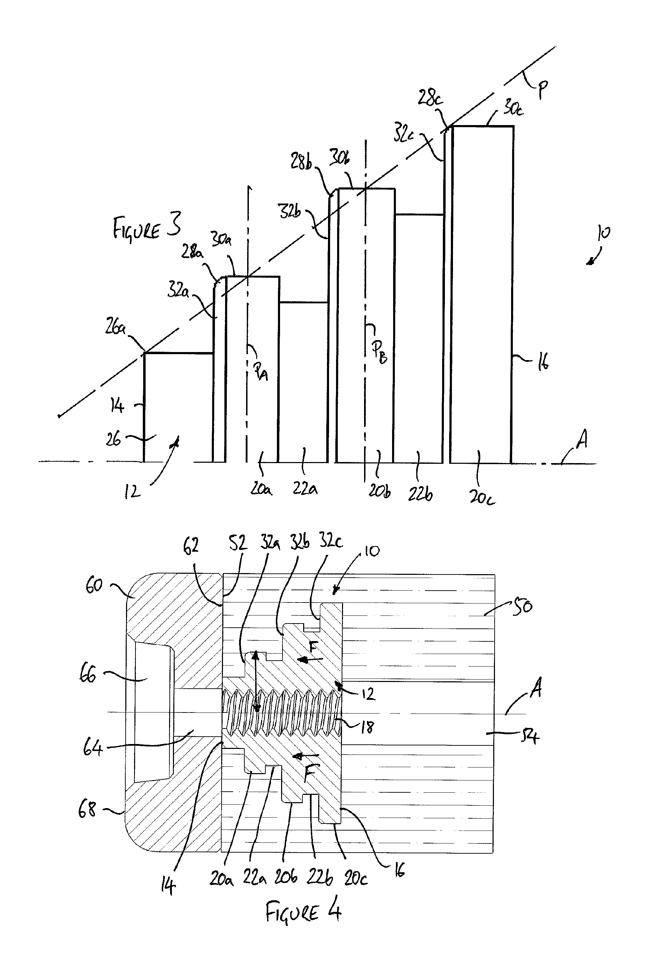

The insert 10 has a generally frustoconical shape, described by the periphery of each rib 20a, 20b, 20c. More specifically, referring to Figure 3, the shape of the insert 10 can be described with reference to a conical construction surface or envelope P. The conical surface P is defined by the insert 10 at two reference points: namely the front corner edge 28c of the third rib 20c, and the front corner 26a of the nose portion 26 of the body 12 (i.e. the corner 26a at the front end 14 of the body 12). The first rib 20a and the second rib 20b are dimensioned such that the mid-plane of each rib, labelled P_{A} and P_{B} respectively in Figure 3, intersects the conical surface P at the outermost surface 30a, 30b of the respective rib 20a, 20b.

Said another way, the conical surface P passes through the mid-plane P_{A}, P_{B} of the outermost surface 30a, 30b of the first and second ribs 20a, 20b, but the outermost surface 30c of the third rib 20c lies within the envelope defined by the conical surface P.

In this embodiment, the insert 10 is of single-piece construction. Therefore the ribs 20a, 20b, 20c and the recesses 22a, 22b are formed integrally with the body 12. In other words, the body 12 extends radially outwards to form the ribs 20a, 20b, 20c and to form the bases 24a, 24b of the recesses 22a, 22b. The insert 10 is preferably made from a metal with a relatively high yield strength and with a relatively high toughness. For example, the insert 10 may be made from steel, brass or a similar metal, although it will be appreciated that other materials could be used. The insert 10 may be made by machining a tubular or cylindrical blank of material, or by any other suitable method.

Use of the insert 10 to fasten two parts together will now be explained with reference to Figure 4.

The insert 10 is encapsulated or embedded within a first part 50. The first part 50 is made from a plastics material, which may for example be a fibre-reinforced plastics material or a non-reinforced plastics material. The insert 10 is set into the first part 50 as the first part 50 is moulded or formed. For example, the insert 10 may be held in position by a dummy bolt while the material of the first part 50 is overmoulded around the insert 10, for instance by injection moulding.

In this way, the material of the first part 50 comes into contact with substantially all of the external surfaces of the insert 10. However, the front end 14 of the body 12 is coplanar with a mating face 52 of the first part 50, so that the front end 14 is exposed on the mating face 52. Also, in the illustrated example, the first part 50 includes a bore 54 that extends axially along the body axis A of the insert 10, such that a small central portion of the back end 16 of the body 12, peripheral to the threaded bore 18, is uncovered where the bore 54 of the first part 50 meets the insert 10.

A second part 60, made for example from metal, is to be joined to the first part 50 by way of the fixing insert 10. The second part 60 has a mating face 62 that abuts the mating face 52 of the first part 50 when the parts are assembled together. The second part 60 includes a bore 64 that opens at one end onto the mating face 62. At its opposite end, the bore 64 opens into a countersink recess 66 formed in an outside face 68 of the second part 60.

The bore 64 in the second part 60 extends along the body axis A of the insert 10, so that the bore 64 is aligned with the threaded bore 18 of the insert 10. The bore 64 and countersink recess 66 are shaped to accept a fastener (not shown), such as a bolt. A threaded shaft of the bolt extends through the bore 64 to engage with the internally-threaded bore 18 of the insert 10. When engaged in the bore 18, an enlarged-diameter head of the bolt sits in the recess 66. In this way, the mating surfaces 52, 62 of the first and second parts 50, 60 respectively are clamped together by the bolt.

In use, the bolt applies forces to the insert 10, generally in the direction of the arrows F in Figure 4, that cause the insert 10 to be pulled towards the mating face 52 of the first part 50. As will now be described, the shape of the insert 10 of the invention greatly improves the resistance to failure of the first part 50 due to the dominant forces F acting on the insert 10, and also makes pull-out of the insert much less likely compared to previously-known insert designs.

Because the material of the first part 50 extends in the recesses 22a, 22b between the ribs 20a, 20b, 20c, a mechanical keying effect is achieved that resists movement of the insert 10 with respect to the first part 50 in the axial direction A.

Also, the front faces 32a, 32b, 32c of the ribs 20a, 20b, 20c present a relatively large cross-sectional area of the insert 10 to transfer the forces F to the material of the first part 50. In particular, the presence of the first and second recesses 22a, 22b increase the surface area of the front faces 32b, 32c of the second and third ribs 20b, 20c, respectively.

In addition, because the front faces 32a, 32b, 32c of the ribs 20a, 20b, 20c lie in planes that are normal to the body axis A and hence normal to the direction of the dominant forces F on the insert 10, the first body 50 is placed under compressive stress, particularly in the region between the insert 10 and the mating face 52 of the first body 50. Advantageously, because the plastics or plastics-based material of the first body 50 tends to be strongest in compression, the insert 10 utilises the properties of the material in the most efficient manner, and reduces the shear stresses and tensile stresses that would arise in the first body 50 if a cylindrical insert were used in place of the stepped insert shape of the invention.

Shear stresses do arise within the material of the first body 50, particularly in the region where the outermost surfaces 30a, 30b, 30c are driven by the forces F acting on the insert 10 to translate along the body axis A with respect to the first body 50. However, because the ribs 20a, 20b, 20c have different radial dimensions, the outermost surfaces 30a, 30b, 30c are offset from one another in the radial direction. This means that, instead of one relatively large region of shear stress that would arise with a cylindrical insert, the insert 10 gives rise to three smaller regions of shear stress, with correspondingly lower maximum stresses in each region. The risk of failure of the first part 50 as a result of the shear stress is therefore reduced.

The radiused shape of the front corner 28a, 28b, 28c (see Figures 1 to 3) of each rib 20a, 20b, 20c helps to reduce stress concentrations, particularly shear stress concentrations, that arise within the first body 50, and therefore provides a further benefit in reducing the risk of failure of the first body 50.

In these ways, the shape of the insert 10 therefore serves to minimise the risk of failure of the material of the first body 50 and the risk of pull-out of the insert 10, in use. Accordingly, the insert 10 of the present invention can be used in a fixing arrangement to join a first part 50 to a second part 60 in arrangement where the parts 50, 60 are subject to relatively high loads that would otherwise cause failure of the fixing arrangement.

It will be appreciated that the dimensions of the insert 10 may be selected according to the application in which the insert 10 is to be used. For example, the length of the insert along the body axis A, between the front and back ends 14, 16, may be approximately 18 mm, and the radius of the third rib 20c may be approximately 12 mm. However, the dimensions of the insert 10 may be scaled up or down according to the diameter of the fastening used, and hence the diameter of the threaded bore 18. When it is desirable to provide a longer threaded bore 18 for engagement with the fastener, the length of the nose portion 26 can be extended, in addition to or instead of increasing the dimensions of the ribs and/or recesses 20, 22 in the axial direction A.

In one example, the radius of the third rib 20c (that is, the largest-diameter rib) is approximately equal to the length of the insert 10 between the front and back faces 14, 16 divided by a factor of 1.6. Preferably, each of the ribs 20 and each of the recesses 22 have the same length in the direction of the body axis A, although in other embodiments different axial dimensions can be provided. For example, each of the ribs 20 and each of the recesses 22 may have a length of between approximately 2 mm and approximately 6 mm in the direction of the body axis A. In one specific example, each rib 20 and each recess 22 has a length of approximately 3 mm in the axial direction.

In another embodiment (not shown), the insert is dimensioned such that the front corners of each anchor portion and the front corner of the nose portion lie on a cone that has an apex that lies on the body axis and a base that is coplanar with the back end of the body. In this embodiment, the radius of the base of the cone is approximately equal to the height of the cone (i.e. the length of the cone along the body axis) divided by a factor of 1.6. In one variant, the height of the cone (along the body axis) is approximately 20 mm.

In the illustrated embodiment, only the front corner of each anchor portion is radiused. In use, the highest shear stress concentration tends to occur around the region of these front corners, so by radiusing the front corners a significant reduction in stress concentration can be achieved. The radius of curvature of the front corners is preferably between 0.2 and 1.0 mm, and more preferably is approximately 0.5 mm. The other corners and edges of the insert are less problematic in this regard and therefore need not be radiused in some embodiments. However, it will be appreciated that any of the edges and corners of the insert may be radiused to reduce further the stress concentrations within the first part.

More generally, the insert need not be a body of revolution. For example, in cross-section the insert could be elliptical, square, hexagonal, cross-shaped, or the insert could have a different shape in cross-section. The anchor portions could be in the form of arms, square plates, hexagonal plates or any other suitable shape.

In the illustrated embodiment, the anchor portions, the material defining the recesses, and the nose portion of the insert are all integrally formed with the body. However, one or more of these elements could be formed as a separate part, suitably joined or attached to the body.

The outer surfaces of the insert may be provided with knurling, ribbing, serrations, ridges, roughness, coatings or other surface treatments or texturing to strengthen the bond between the material of the first part and the insert.

The fixing insert of the invention may be used with any type of fastener, depending on the application. For example, in place of a threaded bolt, the fixing insert may engage with a threaded portion of a different type of fastener, such as a stud, a hook, a clip and so on. The fixing may be adapted to engage with a non-threaded part of a fastener. For example, the fastener may engage with the fixing by way of a bayonet connection, an interference fit, a thermal expansion fit and so on. The fastener may be glued, welded, brazed or otherwise fixed into or on to the fixing. In one embodiment, the insert is integrally formed with a threaded stud that extends outwardly from the mating face of the first part to receive a nut that cooperates with the second part to fasten the parts together.

It will be appreciated that many other variations and modifications of the invention would be contemplated by a person skilled in the art without departing from the scope of the invention as defined in the appended claims.

## Claims

1. A fixing insert (10) comprising:
a body (12) having first and second ends (14, 16) and defining a body axis (A) extending therebetween; the body (12) comprising engagement means (18) for engaging a fastener, in use; and
a plurality of anchor portions (20a, 20b, 20c) distributed along the body axis (A), each anchor portion (20a, 20b, 20c) extending laterally with respect to the body axis (A);
wherein the respective lateral extent (R_{A}) of each anchor portion (20a, 20b, 20c) is proportional to the distance between the respective anchor portion (20a, 20b, 20c) and the first end (14) of the body (12).

2. A fixing insert according to Claim 1, wherein each anchor portion comprises an annular rib (20a, 20b, 20c), and wherein the respective lateral extent of each anchor portion is a radius (R_{A}) of the respective rib (20a, 20b, 20c).

3. A fixing insert according to Claim 2, wherein each rib (20a, 20b, 20c) includes a cylindrical outer surface (30a, 30b, 30c).

4. A fixing insert according to any preceding Claim, wherein the anchor portions (20a, 20b, 20c) are spaced apart along the body axis A to define recess portions (22a, 22b) between adjacent ones of the anchor portions (20a, 20b, 20c).

5. A fixing insert according to Claim 4, wherein each recess portion (22a, 22b) includes a base (24a, 24b), and wherein the lateral distance (R_{R}) from the body axis (A) to each base (24a, 24b) is less than the respective lateral extent (R_{A}) of each anchor portion (20a, 20b, 20c) adjacent to the respective base (24a, 24b).

6. A fixing insert according to Claim 5, wherein the lateral distance (R_{R}) from the body axis (A) to the base (24a, 24b) of each recess portion (22a, 22b) is proportional to the distance of the respective recess portion (22a, 22b) from the first end (14) of the body (12).

7. A fixing insert according to Claim 5 or Claim 6, wherein the base (24a, 24b) of each recess portion (22a, 22b) comprises a cylindrical surface, and wherein the lateral distance from the body axis (A) to the base (24a, 24b) of each recess portion (22a, 22b) comprises a radius (R_{R}) of the base (24a, 24b).

8. A fixing insert according to any preceding Claim, further comprising a nose portion (26) between the first end (14) of the body (12) and a frontmost one (20a) of the anchor portions, the nose portion (26) having a front corner (26a) disposed at the first end (14) of the body (12).

9. A fixing insert according to Claim 8, wherein the anchor portions (20a, 20b, 20c) extend outwardly to a conical envelope (P) defined between the front corner (26a) of the nose portion (26) and a front corner (28a) of a rearmost one (20c) of the anchor portions.

10. A fixing insert according to Claim 9, wherein at least one anchor portion (20a, 20b), other than the rearmost anchor portion (20c), is dimensioned such that the conical envelope (P) meets the midplane (P_{A}, P_{B}) of the respective anchor portion (20a, 20b) at its lateral extent (R_{A}).

11. A fixing insert according to Claim 10, comprising an intermediate anchor portion (20b) disposed between the frontmost (20a) and rearmost (20c) anchor portions; wherein the conical envelope (P) meets the midplane (P_{A}, P_{B}) of the frontmost (20a) and intermediate (20b) anchor portions respectively at their respective lateral extents (R_{A}).

12. A fixing insert according to any preceding Claim, wherein at least a front corner (26a, 26b, 26c) of each anchor portion (20a, 20b, 20c) is radiused.

13. A fixing insert according to any preceding Claim, wherein the engagement means comprises a threaded bore (18) open to the first end (14) of the body (12) for engaging a threaded shaft of the fastener in use.

14. An assembly comprising:
a first part (50);
a fixing insert (10) according to any preceding Claim, the fixing insert (10) being embedded within the first part (50);
a second part (60); and
a fastener;
wherein the fastener is cooperable with the second part (60) and engageable with the engagement means (18) of the fastener to fix the second part (60) to the first part (50).

15. The assembly of Claim 14, wherein the first end (14) of the body (12) of the fixing insert (10) is exposed on a mating surface (52) of the first part (50).
